# EUROPEAN PATENT SPECIFICATION

(11) **EP 0 735 989 B1**
(45) Date of publication and mention of the grant of the patent: **16.08.2000**
(21) Application number: 94930372.1
(22) Date of filing: 25.10.1994
(51) Int. Cl.: C04B 41/00, B44C 5/06

(54) **METHOD FOR COLOURING PIECES OF ROCKS BY LASER RAYS**
VERFAHREN ZUM FAERBEN VON STEINSTUECKEN MITTELS LASERSTRAHLEN
PROCEDE DE MISE EN COULEUR DE MORCEAUX DE ROCHES A L'AIDE DE RAYONS LASER

(43) Date of publication of application: 09.10.1996
(73) Proprietor: DOS SANTOS SIMOES, Fernando Antonio, 2725 Mem Martins (PT); Pinto Coelho, Joao Miguel, 2700 Amadora (PT); Marques Fernandes Rabaça, José Manuel, 2735 Cacém (PT)
(72) Inventor: DOS SANTOS SIMOES, Fernando Antonio, 2725 Mem Martins (PT); Pinto Coelho, Joao Miguel, 2700 Amadora (PT); Marques Fernandes Rabaça, José Manuel, 2735 Cacém (PT)
(74) Representative: Pereira da Cruz, Joao
(86) International application number: PT9400011
(87) International publication number: WO9612684

(56) References cited:
- DATABASE WPI Section Ch, Week 9245 Derwent Publications Ltd., London, GB; Class L02, AN 92-369593 & JP-A-04 270 685 ( TAISEI CONSTR CO LTD) , 28 September 1992
- PATENT ABSTRACTS OF JAPAN vol. 518 no. 16 (C-0999) & JP,A,04 193785 (TAISEI CORP.) 13 July 1992,
- DATABASE WPI Section PQ, Week 8612 Derwent Publications Ltd., London, GB; Class P64, AN 86-080217 & SU,A,1 175 723 ( MINERAL ORE PROCESS) , 30 August 1985
- DATABASE WPI Section Ch, Week 9241 Derwent Publications Ltd., London, GB; Class L02, AN 92-336081 & JP,A,04 240 170 (TADA KENSETSU KK) , 27 August 1992

## Description

The present invention relates to a method for colouring marble and other rocks (for example granite) by the concerted application of an appropriate laser beam and colouring.

Marble is a crystalline granular limestone containing grains of calcite grouped in no particular pattern. When it is pure it is white and it takes on different tones when it contains accessory minerals such as quartz, garnet, mica, iron minerals and graphite. This colouring characterises the type of marble.

The rarer the type of marble, the more expensive it is.

### Prior Art

Methods of colouring or marking the surface of rocks through the application of laser beams are already known. These known methods first of all apply the colorant by means of the immersion of the material in a solution and then the same material undergoes laser radiation.

Of the methods referred to in the preceding paragraph, mention must be made of Japanese patent application n° JP-A-04 270 685. The method contained in this application is essentially characterised in that after the surface of the inorganic material has been immersed of an inorganic metallic salt solution, laser radiation is applied to its surface in order to form a coloured ceramic layer.

Furthermore, Japanese patent application n° JP 900 318 019 describes a method of increasing the durability of inorganic material by impregnating the surface of the material with a solvent followed by the application of laser radiation on the abovementioned surface, in order to form a ceramic layer.

Both of the methods mentioned comprise two separate phases, i.e. the application of the colorant or solvent and the application of the laser.

As demonstrated in the description, the order of application of the colorant or solvent and the laser is reversed in this patent application.

### Detailed description

The object of this invention is to enable lower quality marble to be made more valuable by colouring, and to allow the marble itself to be coloured.

It can also be applied to ornamental rocks other than marble using colouring or colour-marking processes.

According to the invention, a laser beam is applied to the piece of rock, interacting with the material and preparing if for application of an appropriate colouring. The area treated then takes on the desired colour, not only superficially but throughout.

The characteristics and advantages of the invention are highlighted in the sample description here under relating to the attached drawings, which represent:
Fig. 1 represents one of the possible set-ups;
Fig. 2 shows the intensity distribution of three types of laser beam;
Fig. 3 is a plan of the device for moving the piece of rock to be coloured, according to the set-up in fig. 1.

According to this invention a radiation beam (2) coming from the laser (1) is directed onto the piece of rock to be coloured (5). This beam is applied to the area in question directly or by means of a beam sweeping system. Any other more suitable method of application can be used. For this example we will consider a simple application system by means of a mirror (4) at 45° which rotates the vertical beam, the laser being on the horizontal.

The piece of marble or other ornamental stone (5) should be moved towards the beam, although some application systems allow the beam to move itself. For this purpose, the most common shifting system involves a translation table on two axes (6), also known as the X-Y table.

The most usual way of controlling the process is by means of a numeric control device, CNC (7), which accepts computer commands (3) and controls the laser and the X-Y table. The Parameters for laser emission are chosen through the respective control unit (8), which may or may not be computer-controlled.

There is naturally a large variety of means and devices for controlling this process which are not mentioned here.

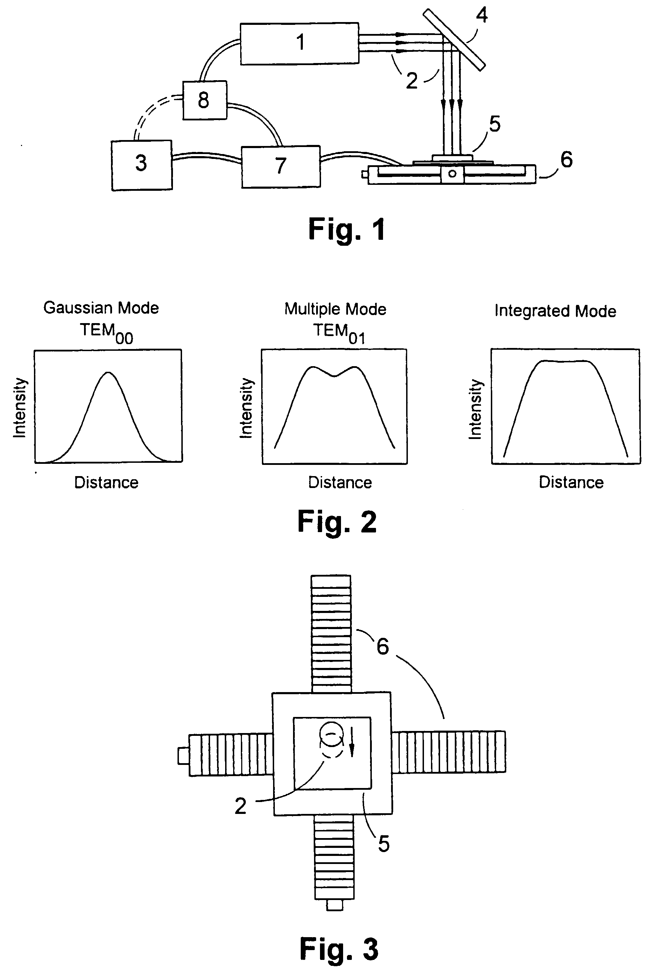

An important factor to be taken into account is the quality of the laser beam. Fig. 2 shows the most common intensity distributions: TEM₀₀, single mode distribution, known as "Gaussian distribution" and TEM ₀₁ multiple ring mode.

The first is normally found in low power lasers whereas the second appears when the range of power of the lasers is increased. High power lasers sometimes have modes higher than TEM_{01 .}

Although the beam mode used is not decisive for the process. It does have an influence on it. Thus, it is important that the area to be treated should be as uniform as possible in order to obtain uniform colouring, which makes a Gaussian mode beam preferable to a multiple mode. However, the ideal mode is obtained when the beam is made up of optic components suitable for this purpose and has approximately uniform intensity distribution. This distribution can also be observed in fig. 2.

In any case, use of the Gaussian mode is perfectly satisfactory provided that shift speeds are guaranteed enabling consecutive beams to be superimposed in such a way that the effect thereof so similar to that of an integrated beam.

Thus, fig. 3 shows in relation to the set-up in fig. 1 the displacement of the beam (2) along the piece of rock (5) carried out by the X-Y table (6) so as to obtain the desired effect.

After the process described, colouring or colourings are applied to the treated piece of rock in order to obtain the desired result. The colouring applied should preferably be liquids and offer high resistance to external agents such as water, cleaning products, etc. Resistance of the colouring is thus guaranteed, as in the case of the actual piece of rock, whether it is polished or not.

The parameters to be used, like the laser power, impulse frequency (if the laser works as a pulse) and the speed of displacement of the piece of rock (or beam) depend in each case particularly on the type of rock, but also on the intensity of colouring desired, the way the beam is applied, etc.

Sometimes lower power can be used, provided that the laser is applied twice to the area in question.

For this invention there are many lasers able to colour marble or other rocks in the way desired. However, naturally some lasers produce better results than others. One of the types of lasers that give the best results is the CO₂ laser. It is a gaseous laser the relation of which is medium infrared, with an wavelength of 10.6 µm.

The following example illustrates the invention without, however, any limiting aspects.

### Example:

Using an assembly as illustrated in fig. 1, with a CO₂ laser and an X-Y table, both controlled by a CNC able to receive instructions from a computer, a piece of white Estremoz marble with grey veins about 5mm thick can be coloured all over its surface by applying approximately 140w of laser power (output) by a beam of about 8mm in diameter and with Gaussian distribution intensity. The piece of rock is shifted at an approximate speed of 2cm/s and the beam is applied all the way through, after which fine ink is applied thereto (permanent ink, in this case "Vividian" emerald green ink produced by Windsor and Newton), which can be applied with a paintbrush or by immersion of the piece or rock.

The invention should be considered as limited by the following claims only.

## Claims

1. Method of colouring pieces of rock, namely marble and granite or other stones, by means of the concerted application of a laser beam applied directly to the area to be coloured, or by means of a sweeping system and a suitable colorant, preferably a liquid one, in order to obtain the desired colour, characterised in that the colorant is applied after the treatment of the piece of rock by laser.

2. Method, according to claim 1, characterised in that the pieces of marble are completely coloured, whether or not they are polished.

3. Method, according to claim 2, characterised in that it acts on pieces of marble, whether or not they are polished, in order to colour not only the surface but also the whole depth of the rock.

4. Method, according to any of the previous claims, characterised in that the pieces of marble are coloured in depth and in a controlled fashion, without altering their quality.

## Patentansprüche

1. Verfahren zur Färbung von Felsenstücken, insbesondere Marmor und Granit, in dem man einen Laserstrahl direkt auf der zu färbenden Oberfläche, oder einen Schweifsystem mit einem zweckmässigen, vorzugsweise flüssigen, Farbstoff verwendet um die gewünschte Farbe zu erhalten, dadurch gekennzeichnet dass man den Farbstoff nach der Behandlung mit dem Laserstrahl aufträgt.

2. Verfahren nach Anspruch 1, dadurch gekennzeichnet dass die Marmorstücke vollständig gefärbt sind, seien sie poliert oder nicht.

3. Verfahren nach Anspruch 2, dadurch gekennzeichnet dass es auf den Marmorstücken wirkt, seien sie poliert oder nicht, sodass es nicht nur die Oberfläche sondern die ganze Tiefe des Felsens färbt.

4. Verfahren nach einem der vorstehenden Ansprüchen, dadurch gekennzeichnet dass die Marmorstücke auf einer kontrollierten Weise tief gefärbt werden ohne ihre Eigenschaften zu ändern.

## Revendications

1. Méthode pour la coloration de morceaux de roches, notamment le marbre et le granit ou d'autres pierres, à travers l'application concertée d'un rayon laser appliqué directement sur la zone à être colorée, ou par le moyen d'un système de balayage et un colorant approprié, de préférence sous forme de liquide, afin d'obtenir la couleur désirée, caractérisée par le fait que le colorant est appliqué après le traitement du morceau de roche à laser.

2. Méthode selon la 1ère revendication caractérisée par le fait que les morceaux de marbre sont totalement colorés, qu'ils soient polis ou non.

3. Méthode selon la 2ème revendication caractérisée par le fait qu'elle agit sur les morceaux de marbre, qu'ils soient polis ou non, afin de colorer non seulement la surface mais aussi toute l'épaisseur de la roche.

4. Méthode selon n'importe laquelle des revendications antérieures caractérisée par le fait que les morceaux de marbre sont colorés profondément et d'une manière contrôlée, sans altérer leur qualité.
